# EUROPÄISCHE PATENTSCHRIFT

(11) **EP 0 918 943 B1**
(45) Veröffentlichungstag und Bekanntmachung des Hinweises auf die Patenterteilung: **11.06.2003**
(21) Anmeldenummer: 97938866.7
(22) Anmeldetag: 02.08.1997
(51) Int. Cl.: F16B 37/08

(54) **LEITUNGSHALTER MIT AUFNAHMEBEREICH ZUM BEIDERSEITIGEN AUFSTECKEN AUF EINEN GEWINDEBOLZEN**
LINE HOLDER WITH AN AREA FOR RECEIVING A THREADED BOLT FROM EITHER SIDE
SUPPORT DE CONDUITS POURVU D'UNE ZONE DE LOGEMENT PERMETTANT SA FIXATION D'UN COTE OU DE L'AUTRE SUR UNE TIGE FILETEE

(30) Priorität: 24.08.1996 DE 19634309
(43) Veröffentlichungstag der Anmeldung: 02.06.1999
(73) Patentinhaber: A. Raymond & Cie, 38028 Grenoble (FR)
(72) Erfinder: BATTIE, Emmanuel, F-38000 Grenoble (FR); WANDELS, Philippe, F-38000 Grenoble (FR)
(74) Vertreter: Kirchgaesser, Johannes, Dipl.-Ing.
(86) Internationale Anmeldenummer: EP9704218
(87) Internationale Veröffentlichungsnummer: WO98007996

(56) Entgegenhaltungen:
- EP-A- 0 628 737
- EP-A- 0 741 251
- US-A- 5 302 070

## Beschreibung

Die Erfindung bezieht sich auf einen Leitungshalter mit einem oder mehreren Haltebereichen und einem Aufnahmebereich zum beiderseitigen Aufstecken auf einen Gewindebolzen gemäß dem Oberbegriff des Anspruchs 1. Dieser Leitungshalter dient zur Befestigung von Flüssigkeitsleitungen, Rohren oder sonstigen langgestreckten Bauteilen an Trägerblechen, vorzugsweise an Karosserieböden von Kraftfahrzeugen. Sie bieten den Vorteil, daß sie sich von beiden Seiten auf die Gewindebolzen aufstecken lassen, so daß die Haltebereiche je nach Anforderung des Kunden entweder vom Karosserieblech abgedeckt oder zum Auffüllen nach unten offen sind.

Aus **EP 0 628 737 A1** ist ein Leitungshalter dieser Art bekannt, bei dem zwischen den beiden Trichteröffnungen an beiden Seiten schräg gegeneinandergerichtete Eingriffsteile (Stützstege) sowie im mittleren Bereich der Öffnung Längsrippen vorgesehen sind. Beim Aufstecken des Aufnahmebereichs tritt der Gewindebolzen durch einen Kranz von Eingriffsteilen hindurch in den Bereich der Längsrippen und wird dort seitlich geführt, während der Kranz von Eingriffsteilen sich an den Gewindeflanken des Gewindebolzens abstützen.

Hierbei wird es als Nachteil empfunden, daß der Gewindebolzen nur von den der Trichteröffnung benachbarten Eingriffsteilen erfaßt und abgestützt werden, während die gegenüberliegenden Eingriffsteile an der Abstützung nicht beteiligt, sondern im Gegenteil dem Bolzengewinde entgegengerichtet sind und damit dem Eindringen des Gewindebolzens im Wege stehen. Um die nötige Haltekraft zu erreichen, müssen die Eingriffsteile relativ biegesteif ausgebildet sein, wodurch aber die Montagekraft gleichzeitig vergrößert wird.

Aufgabe der Erfindung ist es, den vorgenannten Leitungshalter so zu gestalten, daß der Gewindebolzen sich von beiden Seiten voll in den Aufnahmebereich eindrücken läßt und dabei gleichzeitig die Haltekraft der Eingriffsteile verstärkt wird, ohne daß die Montage oder auch Demontage des Leitungshalters erschwert wird.

Diese Aufgabe wird nach der vorliegenden Erfindung dadurch gelöst, daß zwischen den schräg gegeneinander gerichteten Stützstegen zwei gegenüberliegende Federzungen vorgesehen sind, welche quer in den Aufnahmeraum hineinragen und mit ihren verstärkten Enden in der Mitte einen kleinen Spalt bilden, und welche zu den erstgenannten Stützstegen einen solchen Abstand haben, daß sie beim Einführen des Gewindebolzens mit ihren verstärkten Enden vor die entgegengerichteten Stützstege geschwenkt werden und sich dabei ebenfalls an dem Gewinde des Gewindebolzens abstützen.

Hierdurch wird erreicht, daß die beim Stand der Technik entgegengerichteten Stützstege beim Eindringen des Gewindebolzens von den Federzungen weggedrückt werden und der Gewindebolzen mit seiner Spitze in die Öffnung des entgegengerichteten Trichters eindringen kann, so daß der Aufnahmebereich des Leitungshalters zur Gewindebolzenachse ausgerichtet ist. Außerdem werden die sich auf der Gewindeflanke des Gewindebolzens abstützenden Federzungen von den Stützbalken der Stützstege zur Wand hin abgestützt, so daß die zusätzlich eingreifenden Federzungen von den Stützbalken fest an die Gewindeflanken angedrückt werden und die Haltekraft im Aufnahmebereich wesentlich verstärkt wird.

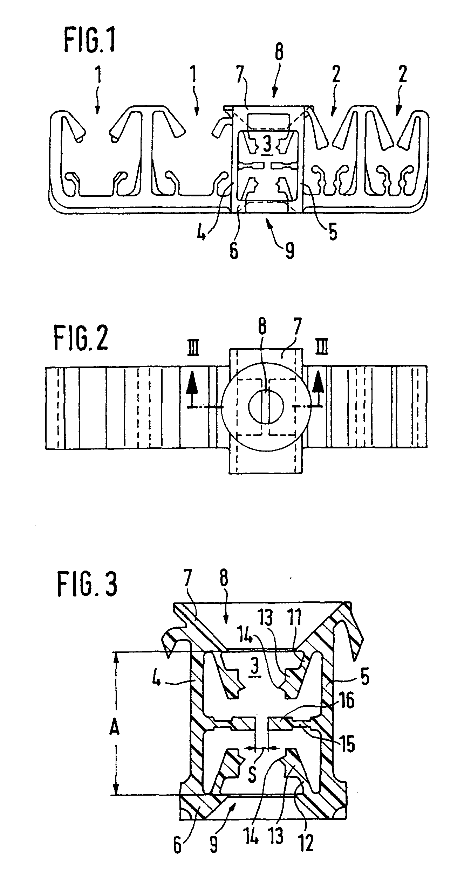

Weitere Merkmale der Erfindung ergeben sich aus den Unteransprüchen und sollen nachfolgend anhand eines in der Zeichnung dargestellten Ausführungsbeispiels näher erläutert werden. Es zeigt
- Figur 1: einen Leitungshalter für vier Leitungen in Seitenansicht,
- Figur 2: den Leitungshalter in Draufsicht,
- Figur 3: einen Teilschnitt durch den Aufnahmebereich gemäß Linie III - III in Figur 2,
- Figur 4: einen Leitungshalter mit vom Karosserieblech abgewandten Haltebereichen vor dem Aufdrücken auf den Gewindebolzen,
- Figur 5: den gleichen Leitungshalter beim Eindringen des Gewindebolzens in den Aufnahmebereich,
- Figur 6: den gleichen Leitungshalter nach dem Aufdrücken auf den Gewindebolzen,
- Figur 7: einen Leitungshalter beim Aufdrücken auf einen hängenden Gewindebolzen, wobei die Öffnungen der Haltebereiche zur Trägerplatte hin gerichtet sind und
- Figur 8: den gleichen Leitungshalter beim Aufdrücken auf einen hängenden Gewindebolzen, wobei die Öffnungen der Haltebereiche von der Trägerplatte weggerichtet sind.

Der in den Figuren dargestellte Leitungshalter dient zur Befestigung von Leitungen oder Rohren an Trägerplatten unter Verwendung von sogenannten Gewindebolzen. Insbesondere sollen mit diesen Leitungshaltern Kraftstoffleitungen am Karosserieboden von Kraftfahrzeugen befestigt werden.

Der aus hartelastischem Kunststoff hergestellte Leitungshalter ist hierzu mit Haltebereichen **1** u. **2** sowie einem Aufnahmebereich **3** zum beiderseitigen Aufstecken auf den Gewindebolzen **10** versehen, welcher an einer Trägerplatte **17** in bekannter Weise angeschweißt oder auf andere Art befestigt ist. Dieser Aufnahmebereich **3** wird durch zwei Seitenwände **4** und **5** gebildet, die zwischen zwei benachbarten Haltebereichen **1** und **2** im Leitungshalter integriert und durch eine Bodenplatte **6** und eine Deckplatte **7** miteinander verbunden sind. Beide Platten **6** und **7** sind mit sich zum Aufnahmebereich **3** trichterförmig verjüngenden Öffnungen **8** und **9** versehen, welche eine quer zur Leitungsachse verlaufende Durchgangsöffnung bilden.

An den Seitenwänden **4** und **5** sind zwischen den beiden Trichteröffnungen **8** und **9** schräg nach innen abstehende gegeneinander gerichtete Stützstege **11** und **12** auffederbar angeformt, die sich am Gewinde des eingedrückten Gewindebolzens **10** abstützen. Die Stützstege **11** und **12** weisen hierzu an ihren Enden massive Stützbalken **13** auf, welche mit zur Mitte abstehenden kleinen Rastnasen **14** versehen sind.

In der Mitte zwischen den oberen Stützstegen **11** und den unteren Stützstegen **12** sind zwei Federzungen **15** vorgesehen, die gegenüberliegend an den Seitenwänden **4** und **5** angeformt sind, quer in den Aufnahmebereich **3** hineinragen und mit ihren verstärkten Enden **16** in der Mitte einen kleinen Spalt **"s"** bilden. Diese Federzungen **15** haben zu den Stützstegen **11** und **12** einen solchen Abstand, daß sie beim Einführen eines Gewindebolzens **10** mit ihren verstärkten Enden **16** jeweils vor die Stützbalken **13** der entgegengerichteten Stützstege **11** oder **12** geschwenkt werden.

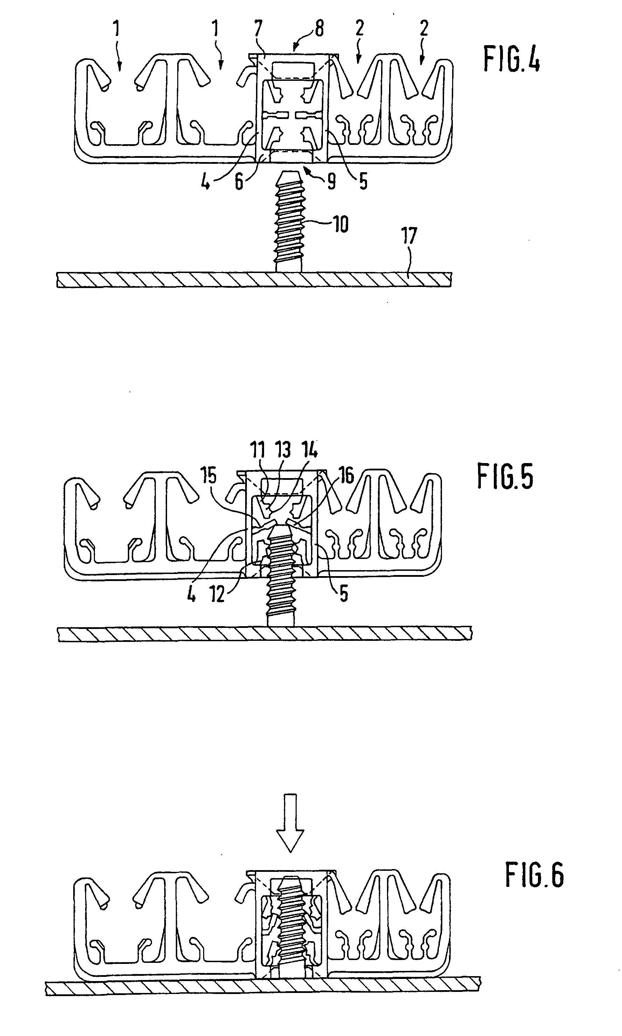

Das erfindungsgemäße Zusammenwirken der Stützstege **11** und **12** und der Federzungen **15** beim Aufstecken oder Aufdrücken des Leitungshalters auf den Gewindebolzen **10** ist aus dem Montageablauf nach den Figuren 4 bis 6 ersichtlich.

Nach dem Eindringen des Gewindebolzens **10** in die Trichteröffnung **9** werden zunächst die eingangsseitigen Stützstege **12** auseinandergedrückt. Sodann werden die verstärkten Enden **16** der Federzungen **15** hochgedrückt (Figur 5) und vor die Rastnasen **14** der Stützbalken **13** der entgegengerichteten Stützstege **11** geschwenkt, wobei letztere bis zur Anlage an die Seitenwände **4** und **5** ausweichen. Hierbei werden die verstärkten Enden **16** der Federzungen **15** zwischen den Balken **13** und dem Gewindebolzen **10** verkeilt und dadurch fest an das Gewinde des Gewindebolzens **10** angedrückt (Figur 6).

Sobald der Gewindebolzen **10** die Öffnung der gegenüberliegenden Trichteröffnung **8** durchdrungen hat, ist der Montagevorgang beendet. Zum Lösen des Leitungshalters bei eingelegten Leitungen besteht die Möglichkeit, die Federzungen **15** mittels eines Schraubenziehers von der Seite her von dem Gewinde abzuheben und dann den Aufnahmebereich **3** vom Gewindebolzen **10** abzuziehen.

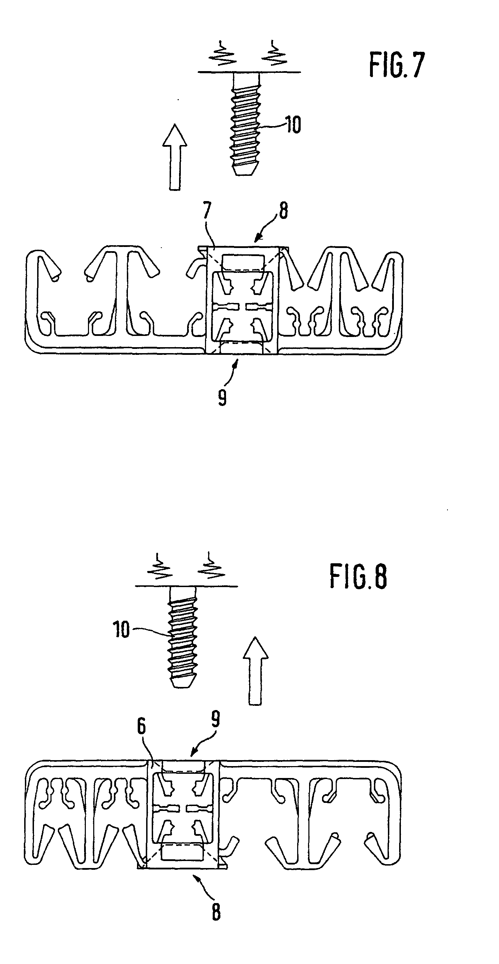

Es versteht sich, daß der Aufnahmebereich **3** sowohl in der in Figur 8 dargestellten Lage als auch, wie aus Figur 7 ersichtlich, in umgekehrter Lage, d.h. mit den Öffnungen der Haltebereiche **1** und **2** zur Trägerplatte **17** hin gerichtet montiert werden kann.

Im erstgenannten Fall können die Leitungen noch nachträglich in die Halter eingedrückt werden. Im letztgenannten Fall dagegen müssen die Leitungen vorher eingelegt sein, bevor der Halter auf den Gewindebolzen aufgedrückt werden kann.

Es versteht sich, daß sich der erfindungsgemäß ausgebildete Aufnahmebereich **3** auch gut in Verbindung mit anderen Halteelementen, die üblicherweise auf Gewindebolzen befestigt werden, mit gleich guter Befestigungswirkung verwenden läßt.

## Patentansprüche

1. Leitungshalter mit einem oder mehreren Haltebereichen ( 1 u. 2 ) und einem integrierten Aufnahmebereich ( 3 ) zum beiderseitigen Aufstecken auf einen Gewindebolzen ( 10 ), wobei der Aufnahmebereich ( 3 ) durch zwei Seitenwände ( 4 u. 5 ) sowie durch zwei sich zum Aufnahmebereich ( 3 ) hin trichterförmig verjüngende Öffnungen (8 u. 9) begrenzt ist, welche mit dem Aufnahmebereich ( 3 ) eine Durchgangsöffnung bilden, und wobei an den Seitenwänden ( 4 u. 5 ) zwischen den beiden Trichtern ( 8 u. 9 ) schräg nach innen abstehende Stützstege ( 11 u. 12 ) angeformt sind, deren auffederbare Enden ( 13 ) gegeneinander gerichtet sind und sich am Gewinde des eingedrückten Gewindebolzens ( 10 ) abstützen, **dadurch gekennzeichnet, daß** zwischen den besagten Stützstegen (11 u. 12 ) zwei gegenüberliegende Federzungen ( 15 ) vorgesehen sind, welche quer zu den Seitenwänden ( 4 u. 5 ) in den Aufnahmeraum ( 3 ) hineinragen und mit ihren verstärkten Enden ( 16 ) in der Mitte einen kleinen Spalt (s) bilden, und welche zu den besagten Stützstegen ( 11 u. 12 ) einen solchen Abstand haben, daß diese Federzungen ( 15 ) beim Einführen des Gewindebolzens ( 10 ) mit ihren verstärkten Enden ( 16 ) vor die Enden ( 13 ) der in Einführrichtung jeweils entgegengerichteten Stützstege ( 11 oder 12 ) geschwenkt werden und sich dabei ebenfalls an dem Gewinde des Gewindebolzens ( 10 ) abstützen.

2. Leitungshalter nach Anspruch 1, **dadurch gekennzeichnet, daß** die Stützstege ( 11 u. 12 ) an ihren auffederbaren Enden massive Balken ( 13 ) aufweisen, welche mit zur Mitte abstehenden kleinen Rastnasen ( 14 ) versehen sind.

3. Leitungshalter nach Anspruch 2, **dadurch gekennzeichnet, daß** die verstärkten Enden ( 16 ) der Federzungen ( 15 ) und die massiven Balken ( 13 ) der Stützstege ( 11 u. 12 ) so bemessen sind, daß letztere beim Einführen des Gewindebolzens ( 10 ) bis zur Anlage an die Seitenwände ( 4 u. 5 ) ausweichen können.

4. Leitungshalter nach einem der vorherigen Ansprüche 1 bis 3, **dadurch gekennzeichnet, daß** der lichte Abstand ( A ) der beiden Einführtrichter ( 8 und 9 ) so bemessen ist, daß der Gewindebolzen ( 10 ) mit seiner Spitze in den jeweils gegenüberliegenden Einführtrichter( 8 oder 9 ) eindringt.

## Claims

1. A line holder comprising one or more holding regions (1 and 2) and an integrated mounting region (3) for fitting at both sides on to a screwthreaded bolt (10), wherein the mounting region (3) is delimited by two side walls (4 and 5) and by two openings (8 and 9) which are reduced in a funnel-shaped configuration towards the mounting region (3) and which with the mounting region (3) form a through opening, and wherein formed on the side walls (4 and 5) between the two funnels (8 and 9) are inclinedly inwardly projecting support legs (11 and 12) whose ends (13) which can be sprung open are directed towards each other and are supported against the screwthread of the screwthreaded bolt (10) when pressed in, **characterised in that** provided between said support legs (11 and 12) are two oppositely disposed spring tongues (15) which project into the mounting space (3) transversely with respect to the side walls (4 and 5) and which with their reinforced ends (16) form at the centre a small gap (s) and which are at such a spacing relative to said support legs (11 and 12) that when the screwthreaded bolt (10) is inserted the spring tongues (15) are pivoted with their reinforced ends (16) into a position in front of the ends (13) of the support legs (11 or 12) which are respectively directed in opposite relationship in the insertion direction and in so doing also bear against the screwthread of the screwthreaded bolt (10).

2. A line holder according to claim 1 **characterised in that** at their ends which can be sprung open the support legs (11 and 12) have solid beam portions (13) which are provided with small retaining projections (14) projecting towards the centre.

3. A line holder according to claim 2 **characterised in that** the reinforced ends (16) of the spring tongues (15) and the solid beam portions (13) of the support legs (11 and 12) are of such dimensions that the latter can deflect until they bear against the side walls (4 and 5) upon insertion of the screwthreaded bolt (10).

4. A line holder according to one of preceding claims 1 to 3 **characterised in that** the internal spacing (A) of the two insertion funnels (8 and 9) is such that the screwthreaded bolt (10) penetrates with its tip into the respective oppositely disposed insertion funnel (8 or 9).

## Revendications

1. Support de canalisations comprenant une ou plusieurs alvéole(s) de retenue (1 et 2) et un logement de fixation intégré (3) permettant son emmanchement d'un côté ou de l'autre sur une tige filetée (10), le logement de fixation (3) étant en l'occurrence délimité par deux parois latérales (4 et 5) ainsi que par deux ouvertures (8 et 9) allant en s'amenuisant progressivement suivant un tracé en forme d'entonnoir en direction du logement de fixation (3), qui définissent, conjointement au logement de fixation (3), un gabarit de passage débouchant et des barrettes d'appui (11 et 12) faisant obliquement saillie vers l'intérieur sont en l'occurrence réalisées solidaires par moulage des parois (4 et 5) entre les deux entonnoirs (8 et 9), dont les extrémités (13) capable de se déformer par cédage élastique sont respectivement orientées en opposition et viennent prendre appui contre les filets de la tige filetée (10) emmanchée par pression, **caractérisé en ce qu'**il est prévu, entre lesdites barrettes d'appui (11 et 12), deux languettes élastiques (15) se faisant respectivement face, qui font saillie dans le logement de fixation (3) selon une disposition oblique par rapport aux parois latérales (4 et 5) et qui définissent au centre, au niveau de leurs extrémités renforcées (18), un petit intervalle (s) et qui sont distantes desdites barrettes d'appui (11 et 12) dans une proportion telle que, lors de l'emmanchement de la tige filetée (10), les extrémités renforcées (16) de ces languettes élastiques (15) sont amenées par basculement devant les extrémités des barrettes d'appui (11 et 12) disposées respectivement en opposition, dans le sens de l'emmanchement et, ce faisant, prennent également appui contre le filetage de la tige filetée (10).

2. Support de canalisations selon la revendication 1, **caractérisé en ce que** les barrettes d'appui (11 et 12) comportent, au niveau de leurs extrémités capables de se déformer par cédage élastique, des plots massifs (13) qui sont munis de petits ergots d'accrochage (14) faisant saillie en direction du centre du logement.

3. Support de canalisations selon la revendication 2, **caractérisé en ce que** les extrémités renforcées (16) des languettes élastiques (15) et les plots massifs (13) des barrettes d'appui (11 et 12) sont dimensionnés dans des conditions telles que ces derniers peuvent, lors de l'introduction de la tige filetée (10), s'écarter par cédage jusqu'à venir en butée contre les parois latérales (4 et 5).

4. Support de canalisations selon l'un des revendications 1 à 3 qui précèdent, **caractérisé en ce que** le gabarit de passage libre (A) des deux entonnoirs d'introduction (8 et 9) sont dimensionnés dans une proportion telle que la pointe de la tige filetée (10) pénètre dans l'entonnoir d'introduction (8 ou 9) respectivement opposé.
